# EUROPÄISCHE PATENTSCHRIFT

(11) **EP 3 568 618 B1**
(45) Veröffentlichungstag und Bekanntmachung des Hinweises auf die Patenterteilung: **08.06.2022**
(21) Anmeldenummer: 17769068.2
(22) Anmeldetag: 19.09.2017
(51) Int. Cl.: F16J 9/20, F16J 9/26

(54) **KOLBENRING UND VERFAHREN ZUR HERSTELLUNG**
PISTON RING AND METHOD FOR PRODUCTION
SEGMENT DE PISTON ET PROCÉDÉ DE FABRICATION

(30) Priorität: 13.01.2017 DE 102017100648
(43) Veröffentlichungstag der Anmeldung: 20.11.2019
(73) Patentinhaber: Federal-Mogul Burscheid GmbH, 51399 Burscheid (DE)
(72) Erfinder: SCHMIDT, Peter, 51399 Burscheid (DE); BUCHMANN, Michael, 81249 München (DE); AUMILLER, Markus, 86316 Friedberg (DE)
(74) Vertreter: Becker Kurig & Partner Patentanwälte mbB
(86) Internationale Anmeldenummer: PCT/EP2017/073625
(87) Internationale Veröffentlichungsnummer: WO 2018/130316

(56) Entgegenhaltungen:
- US-A- 3 814 447
- US-A- 4 153 477
- US-A1- 2004 040 436
- US-A1- 2007 252 338
- US-A1- 2016 244 856

## Beschreibung

### Gebiet der Erfindung

Die vorliegende Erfindung betrifft verschleißbeständige Beschichtungen für Kolbenringe, insbesondere Kolbenringe für Motoren mit großem Kolbendurchmesser, sowie ein Verfahren zur Herstellung solcher Ringe.

### Stand der Technik

Großvolumige Verbrennungsmotoren kommen meist stationär oder als Schiffsmotoren zum Einsatz. Aufgrund der damit verbundenen langen Betriebszeiten werden an die Verschleißbeständigkeit der darin eingesetzten Komponenten besonders hohe Anforderungen gestellt. Dies trifft insbesondere auf die Kolbenringe zu, die im Betrieb hohen Belastungen durch reibenden Verschleiß unterliegen und deren Austausch wegen der notwendigen Stillstandzeit aufwendig und kostspielig ist.

Der reibende Verschleiß der Kolbenringe erfolgt einerseits an der Ringlauffläche, die in Kontakt mit der Zylinderwand steht, und andererseits an den Ringflanken, die mit den Wänden der Ringnut des Kolbens in Berührung kommen. Bekanntermaßen liegt im Falle eines Kompressionsrings beim Arbeitstakt die untere Ringflanke, d.h. die vom Brennraum abgewandte Flanke, an der unteren Nutwand an, wobei Verbrennungsgase durch den Spalt zwischen oberer Ringflanke und oberer Nutwand hinter den Kolbenring in den Raum zwischen Nutboden und Ringinnenseite strömen. Dadurch wird ein Druck auf den Ring erzeugt, der zu einer nach außen gerichteten Kraft auf den Ring führt, welche die Dichtwirkung zwischen Ringlauffläche und Zylinderwand verstärkt. Ein Verschleiß der Ringflanke führt dazu, dass Verbrennungsgase zwischen unterer Ringflanke und Ringnutwand hindurch auf die brennraumabgewandte Seite des Kolbenrings gelangen können, womit auch der Druck auf den Ring verringert wird und somit zusätzlich die Dichtwirkung zwischen Ringlauffläche und Zylinderwand beeinträchtigt wird.

Um eine hohe Dichtwirkung über einen langen Betriebszeitraum zu gewährleisten ist es also nicht nur notwendig die Ringlauffläche des Kolbenrings verschleißbeständig zu gestalten, sondern auch die Ringflanken müssen eine hohe Verschleißbeständigkeit aufweisen. Hierzu ist aus dem Stand der Technik ein Härten oder ein Verchromen der Ringflanken bekannt.

US 2004/0040436 A1 betrifft einen Kolbenring mit einer durch Ionenplattieren aufgetragenen Verschleißschutzschicht; zusätzlich kann eine nitrierte Schicht angebracht sein. US 2016/0244856 A1 betrifft Gleitringe, die an einer Funktionsfläche umgeschmolzene Ledeburit-Bereiche aufweisen. US 4153477 A betrifft eine Verschleißfläche, insbesondere eines Kolbenrings, die Ledeburit aufweist, wobei in dem Ledeburit auf 0,1-10% der Fläche durch entsprechende Steuerung der Abkühlgeschwindigkeit Graphitpartikel eingelagert werden. US 3814447 A betrifft Verschleißteile, insbesondere Kolbenringe, auf deren Verschleißflächen mittels Plasmaspritzens in Nuten Verschleißschutzbeschichtungen aufgebracht werden. US 2007/0252338 A1 betrifft einen trapezförmigen Kolbenring mit Verschleißschutzbeschichtung.

Aufgrund immer strengerer Umweltauflagen und dem Wunsch eines möglichst niedrigen Treibstoffverbrauchs ergibt sich die Aufgabe die tribologischen Eigenschaften, d.h. Verschleiß, Reibung und Korrosion, von Kolbenringen für insbesondere Großkolbenmotoren weiter zu verbessern.

### Zusammenfassung der Erfindung

Erfindungsgemäß wird das Problem durch einen Kolbenring gemäß einem der Ansprüche 1 bis 7 gelöst.

Erfindungsgemäß gelöst wird das Problem weiter durch ein Verfahren zur Herstellung eines Kolbenrings mit ledeburitisch umgeschmolzenem Graugussgefüge gemäß einem der Ansprüche 8 bis 15.

### Kurze Beschreibung der Zeichnung

Im Folgenden werden beispielhafte Ausführungsformen der Erfindung mit Bezug auf die Figuren genauer beschrieben.
Figur 1 zeigt eine axiale Querschnittsansicht der Struktur eines erfindungsgemäßen Kolbenrings.
Figur 2 stellt eine Fotografie eines Schnitts eines erfindungsgemäß hergestellten Kolbenrings dar.
Figuren 3A bis 3G zeigen Schritte einer beispielhaften Ausführungsform eines Verfahrens zur Herstellung eines möglichen erfindungsgemäßen des Kolbenrings.

Im Folgenden werden sowohl in der Beschreibung als auch in der Zeichnung gleiche Bezugszeichen für gleiche oder ähnliche Elemente oder Komponenten verwendet. Es ist zudem eine Bezugszeichenliste angegeben, die für alle Figuren gültig ist. Die in den Figuren dargestellten Ausführungen sind lediglich schematisch und stellen nicht die tatsächlichen Größenverhältnisse dar.

### Ausführliche Beschreibung der Erfindung

Die Gefügeausbildung eines Eisengusswerkstoffs wird, außer durch die Legierungsbestandteile, wesentlich durch die Abkühlungsbedingungen beim Erstarren des Materials bestimmt. Das resultierende Gefüge, d.h. die auftretenden Phasen und deren Verteilung, bestimmt bei Gebrauchstemperatur die mechanischen Eigenschaften eines aus einer Eisen-Kohlenstoff-Legierung bestehenden Werkstücks maßgeblich.

Erstarrt Gusseisen langsam im thermodynamischen Gleichgewicht entsteht hauptsächlich ein Gefüge aus Eisen (Fe) und Graphit (C), dieses wird als Grauguss bezeichnet, wobei man, je nachdem in welcher Gestalt der Graphit vorliegt, zwischen lamellaren Gusseisen, vermikularen Gusseisen und Gusseisen mit Kugelgraphit unterscheidet. Bei schnellerem Erstarren entsteht ein metastabiles, sogenanntes ledeburitisches Gefüge (Ledeburit-Gefüge), das aus Eisen und Eisencarbid (Fe₃C, Zementit) besteht, sogenannter Weißguss. Das ledeburitische Gefüge weist eine höhere Härte auf als Grauguss und unterliegt entsprechend geringerem Verschleiß, während Grauguss über eine höhere Zähigkeit verfügt und entsprechend weniger anfällig für Bruch bzw. Rissausbreitung ist.

Um einen langlebigen Kolbenring gemäß der vorliegenden Erfindung zu erhalten wird das Graugussgefüge eines Ringkörpers zumindest teilweise an einer Ringflanke in ein Ledeburit-Gefüge umgeschmolzen und an der Ringlauffläche zusätzlich mit einer Verschleißschutzschicht überzogen, die auch an der Ringlauffläche freiliegendes Ledeburit-Gefüge bedeckt. Das Ledeburit-Gefüge wird erzeugt indem die Oberfläche des Ringkörpers zunächst an den entsprechenden Stellen erhitzt wird, um es teilweise aufzuschmelzen, und nachfolgend gewartet wird bis der Werkstoff wieder abkühlt. Da der Ringkörper nur an der Oberfläche aufgeschmolzen wird, im Inneren jedoch noch kühl und fest ist, findet eine "Selbstabschreckung" statt, bei der der geschmolzene Bereich relativ schnell abkühlt und so ein Bereich aus Ledeburit-Gefüge an der Oberfläche entsteht.

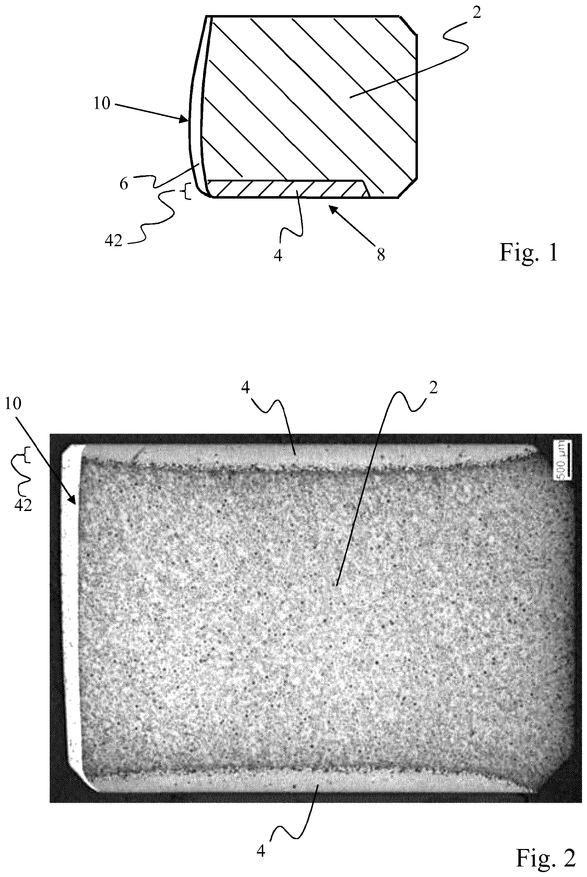

In Figur 1 ist eine beispielhafte Ausführungsform eines solchen Kolbenrings dargestellt; gezeigt ist ein axialer Schnitt, d.h. die Ringachse liegt in der Schnittebene. Der Ringkörper besteht größtenteils aus Graugussgefüge 2. Eine der Ringflanken 8 weist einen Bereich aus Ledeburit-Gefüge 4 auf, der sich bis zur Kante zwischen einer Ringflanke 8 und einer Ringlauffläche 10 erstreckt und der durch Umschmelzen des ursprünglichen Graugussgefüges hergestellt ist. Auf der Ringlauffläche 10 befindet sich eine Verschleißschutzschicht 6. Dabei bedeckt die Verschleißschutzschicht 6 in einem Überlappungsbereich 42 von Verschleißschutzschicht 6 und Ledeburit-Gefüge 4 das Ledeburit-Gefüge 4. In Figur 1 bedeckt ein Großteil der Verschleißschutzschicht 6 eine radiale Außenfläche des Ringköpers 2 in dem das ursprüngliche Gusseisengefüge vorliegt. In Figur 1 ist das Ledeburit-Gefüge nur an der unteren, kurbelwellenseitigen bzw. brennraumabgewandten Ringflanke 8 des Kolbenrings bzw. Ringkörpers 2 aufgebracht, da diese Fläche im Betrieb einer stärkeren Belastungen ausgesetzt ist.

Der Bereich aus Ledeburit-Gefüge 4 kann sich über die gesamte Ringflanke erstrecken. Alternativ ist vorgesehen, dass ein radial innerer Bereich der Ringflanke kein Ledeburit-Gefüge aufweist, wobei sich dieser radial innere Bereich bevorzugt über 1/3, weiter bevorzugt über 2/3, einer radialen Dicke des Ringkörpers erstreckt. Es wird also bevorzugt der äußere, besonders stark beanspruchte Ringflankenbereich mit einer Schicht aus Ledeburit versehen. Einen ähnlichen Effekt hat eine Variation einer Tiefe des Ledeburit-Gefüges in radialer Richtung, wobei hier entsprechend bevorzugt ist, dass die Tiefe radial nach außen zunimmt.

Im Allgemeinen, abgesehen von Übergangsbereichen zu eventuellen Bereichen ohne Ledeburit, beträgt die Tiefe des Ledeburit-Gefüges zwischen 0,15 mm und 1,0 mm, bevorzugt zwischen 0,3 mm und 0,7 mm. Diese Gestaltungsmöglichkeiten erlauben es, einen optimalen Kompromiss zwischen erwünschter Zähigkeit des Ringkörpergraugussgefüges und Verschleißfestigkeit des spröden Ledeburit-Gefüges zu erreichen. Um in Umfangrichtung unterschiedlichen Belastungen zu begegnen ist eine Variation der Tiefe des Ledeburit-Gefüges in Umfangrichtung denkbar, bevorzugt ist hier eine Tiefe, die an den, bzw. in Richtung der, Stoßenden zunimmt, um einem an den Stoßenden stärker auftretenden Verschleiß vorzubeugen.

In Fig. 1 ist lediglich eine Ringflanke mit einem Bereich aus Ledeburit-Gefüge versehen, bei welcher es sich bevorzugt um die vom Brennraum abgewandte Ringflanke handelt, da diese beim Betrieb stärker belastet wird. Gemäß einer weiteren Ausführungsform ist vorgesehen, beide Ringflanken mit Bereichen aus Ledeburit-Gefüge zu versehen. Alternativ bzw. zusätzlich kann auch die Ringlauffläche mit einem Ledeburit-Gefüge versehen sein.

Da sich die Verschleißschutzschicht 6, bevorzugt durchgehend, über die Ringlauffläche 10 und den sich bis zur Ringkante erstreckenden Bereich aus Ledeburit-Gefüge 6 erstreckt, liegt an der Ringkante zwischen Ringlauffläche und Ringflanke kein außenliegendes Graugussgefüge vor, das gegebenenfalls anfällig für Verschleiß und Korrosion wäre. Der Aufbau mit einer unter der Verschleißschutzschicht liegenden Ledeburit-Gefüge-Schicht bietet den weiteren Vorteil, dass, wenn die äußere Verschleißschutzschicht an einer Stelle abgenutzt ist, die Schicht aus Ledeburit-Gefüge als Rückhalt dient, der einen von dieser Stelle aus fortschreitenden Verschleiß unterbindet. Die Verschleißschutzschicht liegt in Form einer thermischen Spritzschicht, einer Chromdispersionsschicht, oder auch einer anderen physikalischen Beschichtung, z.B. einer PVD- oder DLC-Schicht, vor; hier ist PVD: Physical Vapor Deposition, physikalische Gasphasenabscheidung, und DLC: Diamond-Like Carbon, diamantartiger Kohlenstoff. Es ist auch möglich, eine Hartstoffbeschichtung mittels Laser aufzutragen.

Die Kante zwischen Ringflanke 8 und Ringlauffläche 10 ist in Fig. 1 abgerundet gestaltet; durch eine solche Ausführung mit einem gleichmäßigen Übergang wird das Auftreten von Spannungsspitzen bzw. Kerbspannungen, welche die spröde Verschleißschutzschicht beschädigen könnten, vermieden, dies wird weiter durch eine bevorzugt ballige oder ballig schiefe Form der Ringlauffläche 10 unterstützt. Hier wäre auch das Anbringen einer Fase denkbar. Bei einer Ausführungsform, bei der beide Ringflanken mit einem Bereich aus Ledeburit-Gefüge versehen sind, kann die entsprechende andere Ringkante in gleicher Weise gestaltet sein.

Ein Radius der Abrundung liegt im Bereich von 1 mm bis 3 mm, wobei hier im Allgemeinen die Abrundung nicht einen konstanten Radius hat, sondern in der Mitte einen kleineren Radius haben wird und dann flacher wird und mit größerem Radius in die Ringlauffläche und die Ringflanke übergeht. Insbesondere kann die Abmessung von Fase bzw. Abrundung (d.h. hier der Radius) in Umfangrichtung variieren. Ist der Kolbenring mit einer Innenfase versehen, so kommt es aufgrund der Querschnittsstörung unter Spannung (im eingebauten Zustand) zu einem Twisten (Verdrehen) des Ringkörpers. Dieser Twist wirkt sich am Ringrücken stärker aus als an den Stoßenden, was zu Spannungsunterschieden in Umfangrichtung in der Verschleißschutzschicht führen kann, was eventuelle Beschädigungen begünstigt. Durch eine Variation der Abmessung der Fase bzw. Abrundung in Umfangrichtung kann dies ausgeglichen werden.

Weiterhin können auch die Stoßflächen Bereiche aus Ledeburit-Gefüge aufweisen, die sich bis zur Kante Stoßfläche/Ringlauffläche erstrecken. Die entsprechenden Bereiche aus Ledeburit werden wieder mit einer Verschleißschutzschicht versehen. Ist auch die Ringlauffläche mit Ledeburit-Gefüge versehen, wird erreicht, dass auch an den radial außenliegenden Kanten der Stoßflächen kein Graugussgefüge freiliegt, womit ein von dort ausgehender Verschleiß verhindert werden kann. Hierbei können die gesamten Stoßflächen aus Ledeburit-Gefüge bestehen; wobei bevorzugt ist, dass ein radial äußerer Bereich der Stoßflächen, der sich über 2/3 der radialen Dicke des Ringkörpers erstreckt, aus Ledeburit-Gefüge besteht, weiter bevorzugt ist, dass ein radial äußerer Bereich der Stoßflächen, der sich über 1/3 der radialen Dicke des Ringkörpers erstreckt, aus Ledeburit-Gefüge besteht.

Um einen erfindungsgemäßen Kolbenring herzustellen wird zunächst ein Ringkörper aus Grauguss hergestellt, d.h. beim Gießen erfolgt das Erstarren der Eisen-Kohlenstoff-Legierung im thermodynamischen Gleichgewicht, so dass ein Graugussgefüge entsteht. Nachfolgend wird an mindestens einer Ringflanke der Bereich an der Oberfläche, der mit einem Ledeburit-Gefüge versehen werden soll, erhitzt und aufgeschmolzen. Das Erhitzen kann durch Bestrahlen mit hochenergetischer Strahlung erfolgen, wobei zum Beispiel ein Laserstrahl, ein Elektronenstrahl, Lichtbogenschweißen, Plasmaschweißen oder Wolfram-Inertgas-Schweißen zum Einsatz kommt. Hierbei wird im Allgemeinen nicht der gesamte Bereich auf einmal erhitzt, da z.B. ein dafür verwendeter Laserstrahl einen Durchmesser von ca. 1 mm bis einige 10 mm hat, sondern es wird jeweils an einer Stelle erhitzt und der gesamte umzuschmelzende Bereich wird durch eine relative Bewegung von Ring und hochenergetischer Strahlung überstrichen. Dies kann dadurch geschehen, dass die Strahlungsquelle bewegt wird, z.B. mittels eines Roboterarms, oder dadurch, dass der Ring drehbar gelagert ist und gedreht wird, um einen kreisförmigen Bereich zu überstreichen, was auch eine einfache Variation der Tiefe des Umschmelzungsbereichs in Umfangrichtung ermöglicht. Die Tiefe des Umschmelzungsbereichs wird durch den Energieeintrag bestimmt.

Ein Abkühlen erfolgt durch Selbstabschreckung, es wird also kein Abschreckmedium verwendet. Dieses Abkühlen erfolgt relativ schnell, so dass ein Ledeburit-Gefüge entsteht und bei dem oben beschriebenen Vorgang eine Stelle des Kolbenrings bereits abgekühlt sein wird, während andere Stellen erst noch erhitzt werden.

Der mindestens eine Bereich der Ringflanke, der umgeschmolzen werden soll, ist so gewählt, dass er sich bis zur Kante zwischen Ringflanke und Ringlauffläche erstreckt. Neben den Ringflanken ist es auch möglich, die Ringlauffläche mit einem Ledeburit-Gefüge zu versehen, d.h. diese auch zu erhitzen.

Zum Abbau eventuell durch das Erhitzen und nachfolgende Abkühlen entstandener Spannungen im Ringkörper kann nach dem Abkühlen des Ringkörpers ein Spannungsarmglühen durchgeführt werden. Dies erfolgt bei einer Temperatur von 450 °C bis 600 °C, bevorzugt von 500 °C bis 540°C, weiter bevorzugt von 510 °C bis 530°C, über eine Zeitdauer von 1 Stunden bis 4 Stunden, bevorzugt von 1,5 Stunden bis 3 Stunden, weiter bevorzugt von 1,8 Stunden bis 2,3 Stunden, gefolgt von einem erneuten Abkühlenlassen. Ein Aufschneiden des Ringkörpers erfolgt bevorzugt nach dem Spannungsarmglühen.

An der Ringlauffläche 10 wird dann Material abgetragen bis ledeburitisch umgeschmolzenes Graugussgefüge an der Ringlauffläche freiliegt. Anschließend wird eine Verschleißschutzschicht auf die Ringlauffläche einschließlich der dort freiliegenden Ledeburit-Gefüge-Bereiche aufgetragen.

Weiterhin kann beim Schritt des Umschmelzens auch die Ringlauffläche 10 umgeschmolzen werden, so dass auch an dieser ein ledeburitisch umgeschmolzenes Graugussgefüge vorliegt. Da in diesem Fall bereits Ledeburit-Gefüge an der Ringlauffläche freiliegt, erfolgt hier das Abtragen von Material an der Ringlauffläche bis die gewünschte Form erreicht ist, bzw bis beim Umschmelzen auftretende Verformungen, insbesondere an den Kanten, beseitigt sind.

Alternativ kann ein Umschmelzen der Ringlauffläche in ein Ledeburit-Gefüge nach dem Abtragen von Material an der Ringlauffläche erfolgen (und vor dem Aufbringen der Verschleißschutzschicht). Hierbei wird an mindestens einer Kante zwischen Ringlauffläche 10 und Ringflanken ein schmaler Bereich nicht erhitzt, d.h. das bereits durch das Abtragen an der Ringlauffläche freigelegte Ledeburit (von dem umgeschmolzenen Bereich an den Ringflanken) wird nicht erneut geschmolzen. Gegebenenfalls kann nachfolgend ein Spannungsarmglühen erfolgen.

Es ist auch hier möglich, nicht die gesamte Ringlauffläche mit ledeburitisch umgeschmolzenen Graugussgefüge zu versehen, sondern lediglich Teilbereiche, etwa bei einer balligen Ringlauffläche den umlaufenden Bereich, der radial am weitesten außen liegt, der also mit der Zylinderwand in Kontakt kommt.

Sollen Kanten mit Fasen oder Abrundungen versehen werden, so erfolgt dies nach dem Umschmelzen des Graugusses in ein Ledeburit-Gefüge.

Als möglicher weiterer Verfahrensschritt nach dem Umschmelzen des Bereichs der mindestens einen Ringflanke des Ringkörpers ist ein Abschleifen der Oberfläche der mindestens einen Ringflanke auf eine Rauheit von Ra 0,5 - 1,0 µm vorgesehen. Dadurch wird der Verschleiß an Ringflanke und Nutwand weiter verringert. Bevorzugt werden beide Ringflanken abgeschliffen. Eine Verbesserung der Korrosionsbeständigkeit wird durch den abschließenden Schritt eines Phosphatierens des Ringkörpers bzw Aufbringen einer Phosphatschicht erreicht.

Fig. 2 zeigt eine Fotografie eines Schnitts durch einen von den Erfindern produzierten Kolbenring aus Grauguss 2, bei dem beide Ringflanken mit Ledeburit-Gefüge 4 versehen sind. In Figur 2 ist der Überlappungsbereich 42 an der oberen bzw. brennraumseitigen Ringlaufflächenkante gekennzeichnet.

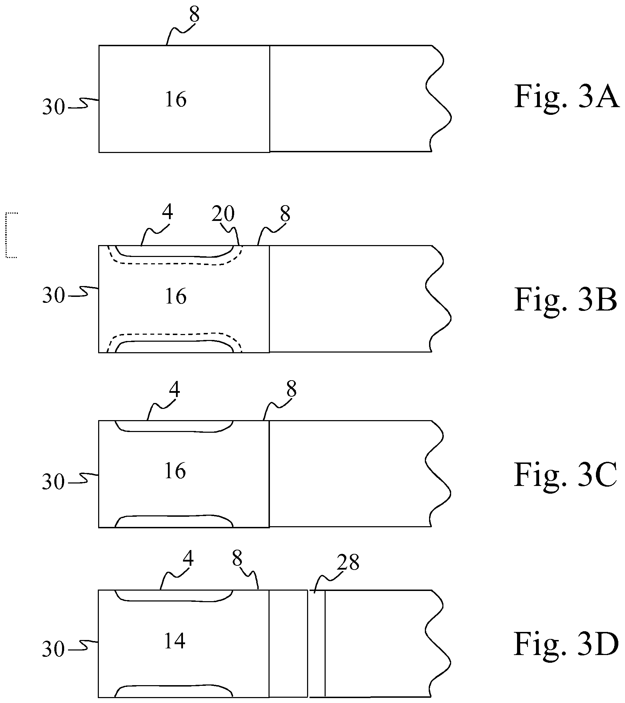

Figuren 3A bis 3G zeigen Schritte einer beispielhaften Ausführungsform eines Verfahrens zur Herstellung eines möglichen erfindungsgemäßen des Kolbenrings.

Figur 3A zeigt eine geschnittene Teilansicht eines Kolbenrings bzw. eines Kolbenringrohlings 16. Die Achse des geschlossenen Kolbenringrohlings 16 liegt rechts außerhalb des Blattes. Der Kolbenringrohling 16 bildet hier einen geschlossenen Ring. Die Ringflanke 6 bezeichnet hier die obere Ringflanke. Um die Figur nicht mit redundanten Elementen zu überfrachten wurde darauf verzichtet die Radiale Innenfläche und die untere Ringflanke mit einem gesonderten Bezugszeichen zu kennzeichnen. Die radiale Außenfläche des Kolbenringrohlings 16 ist mit dem Bezugszeichen 30 als Ringlauffläche gekennzeichnet.

In Figur 3B wurden Teile der oberen und unteren Ringflanke 8 umgeschmolzen, wobei an den umgeschmolzenen Stellen ein Ledeburit-Gefüge 4 erzeugt wurde. Vor dem Umschmelzen kann der Kolbenringrohling 16 erwärmt werden, um den Umschmelzvorgang zu optimieren. Unterhalb und neben den umgeschmolzenen Bereichen mit Ledeburit-Gefüge 4 befindet sich eine Wärmeeinflusszone, in der sich Spannungen in dem Gusseisengefüge befinden.

Figur 3C stellt eine Situation nach einem Spannungsarmglühen dar, bei dem die Wärmeeinflusszonen 20 beseitigt wurden.

In Figur 3D wurde der Kolbenringrohling 16 aufgeschnitten und wird nun weiter als Ringkörper 14 bezeichnet. Durch den vorhergehenden Schritt des Spannungsarmglühens verwindet sich der Ring nach dem Aufschneiden nicht. Der Stoß 28 ist an der Stoßfläche zu erkennen, die jedoch größtenteils von dem verbleibenden Kolbenring verdeckt ist.

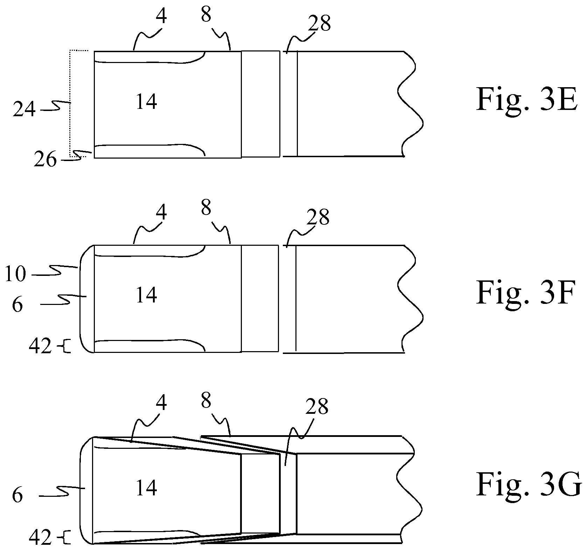

Figur 3E zeigt den Ringkörper nachdem er bevorzugt unrund aufgespannt wurde, und nachdem die Ringlauffläche durch spanendes Bearbeiten zurückgesetzt bzw. abgetragen wurde. Der abgetragene Ringlaufflächenbereich 24 ist durch eine gestrichelte Linie dargestellt. Es wird dabei mindestens ein Millimeter Material abgetragen. Nach dem Abtragen der Ringlauffläche liegt Ledeburit-Gefüge 4 aus dem Umschmelzbereich an der Ringlauffläche frei. Es ist ebenfalls möglich den Ringköper 14 rund einzuspannen und rund oder unrund zu schleifen.

Figur 3F zeigt den Kolbenring nachdem eine Verschleißschutzschicht 6 auf die Ringlauffläche aufgebracht wurde. Dabei hat sich ein Überlappungsbereich 24 gebildet in dem die Verschleißschutzschicht 6 über dem Ledeburit-Gefüge 4 liegt. Die Verschleißschutzschicht überdeckt dabei nicht die Ringflanke 8 bzw. das Ledeburit-Gefüge 4 an der Ringflanke. Abweichungen können jedoch im Bereich von Nasen, Fasen oder Verrundungen (nicht dargestellt) im Bereich eines Übergangs zwischen der Ringflanken 8 und der Ringlauffläche entstehen.

Figur 3G stellt einen weiteren Arbeitsschritt dar, bei dem der vorher im Querschnitt rechteckige Kolbenring zu einem Trapezring abgeändert wird. Die obere und untere Kolbenringflanke 8 wird dabei entlang einer Kegelfläche abgetragen, wodurch die radiale Abmessung des Ledeburit-Gefüges 4 verringert wird. Zusätzlich nimmt die axiale Dicke des Ledeburit-Gefüges in Richtung eines Zentrums des Kolbenrings ab. Ein ähnlicher Effekt lässt sich erzielen wenn ein Invers-Trapezring (dessen axiale Dicke innen größer ist als an der Ringlauffläche) umgeschmolzen und dann zu einem Rechteckring durch Spanen umgewandelt wird. So lässt sich einfach eine Dickenveränderung der Ledeburit-Schicht in Axialrichtung erreichen. Das Umwandeln kann dabei ebenfalls vor oder nach dem Aufschneiden des Rings durchgeführt werden.

### Bezugszeichenliste

- 2.: Graugussgefüge
- 4: Ledeburit-Gefüge
- 6: Verschleißschutzschicht
- 8: Ringflanke
- 10: Ringlauffläche / Ringlauffläche
- 14: Ringkörper
- 16: Kolbenringrohling
- 20: Wärmeinflusszone
- 24: Abgetragener Ringlaufflächenbereich
- 26: an der Ringlauffläche freiliegendes Ledeburit-Gefüge
- 28: Stoß
- 30: Ringlauffläche bzw. radiale Außenfläche des Kolbenringrohlings 16
- 42: Überlappungsbereich von Verschleißschutzschicht und Ledeburit-Gefüge

## Patentansprüche

1. Kolbenring, umfassend einen Ringkörper (14) aus Grauguss,
wobei der Ringkörper (14) an mindestens einer Ringflanke (8) einen Bereich aus ledeburitisch umgeschmolzenem Graugussgefüge (4) aufweist, der sich bis zu einer Kante einer Ringlauffläche (10) und bis in die Ringlauffläche (10) hinein erstreckt;
wobei eine Verschleißschutzschicht auf der Ringlauffläche (10) einschließlich des Bereichs aus ledeburitisch umgeschmolzenem Graugussgefüge (4) aufgebracht ist; wobei im Querschnitt die Dicke des ledeburitisch umgeschmolzenen Graugussgefüges (4) an der Ringflanke (8) in radialer Richtung variiert; und
wobei die Dicke des ledeburitisch umgeschmolzenen Graugussgefüges (4) zwischen 0,15 mm und 1,0 mm beträgt.

2. Kolbenring gemäß Anspruch 1, wobei der Ringkörper (14) an der Ringlauffläche (10) einen Bereich aus ledeburitisch umgeschmolzenem Graugussgefüge (4) aufweist, der sich über die gesamte Ringlauffläche (10) erstreckt.

3. Kolbenring gemäß Anspruch 1, wobei die Verschleißschutzschicht in Form einer thermischen Spritzschicht, einer mittels Laser aufgetragenen Hartstoffbeschichtung, einer Chromdispersionsschicht, einer PVD-Schicht oder einer DLC-Schicht vorliegt.

4. Kolbenring gemäß einem der vorstehenden Ansprüche, wobei die Dicke des ledeburitisch umgeschmolzenem Graugussgefüges (4) in Umfangrichtung variiert, wobei die Dicke an Stoßenden zunimmt.

5. Kolbenring gemäß einem der Ansprüche 1 bis 4, wobei die Dicke des ledeburitisch umgeschmolzenen Graugussgefüges (4) nach außen zunimmt oder wobei ein radial innerer Bereich der mindestens einen Ringflanke (8) kein ledeburitisch umgeschmolzenes Graugussgefüge (4) aufweist, wobei sich der radial innere Bereich bevorzugt über 1/3, weiter bevorzugt über 2/3 einer radialen Abmessung des Ringkörpers (14) erstreckt.

6. Kolbenring gemäß einem der Ansprüche 1 bis 5, wobei die Kante zwischen Ringlauffläche (10) und der mindestens einen Ringflanke (8) eine Fase aufweist oder wobei die Kante zwischen Ringlauffläche (10) und der mindestens einen Ringflanke (8) abgerundet ist, wobei die Abrundung bevorzugt einen Radius von 1 mm bis 3 mm aufweist; wobei die Abmessung der Fase bzw. der Abrundung in Umfangrichtung variiert.

7. Kolbenring gemäß einem der vorstehenden Ansprüche, wobei der Kolbenring ein Trapezring ist.

8. Verfahren zur Herstellung eines Kolbenrings mit ledeburitisch umgeschmolzenem Graugussgefüge, umfassend:
Herstellen eines Ringkörpers (14) aus Grauguss;
Umschmelzen eines Bereichs mindestens einer Ringflanke (8) des Ringkörpers (14), um an der mindestens einen Flanke ein ledeburitisch umgeschmolzenes Graugussgefüge mit einer Dicke zwischen 0,15 mm und 1,0 mm zu erzeugen, Abtragen von Material an einer Ringlauffläche (10) des Ringkörpers (14), bis ledeburitisch umgeschmolzenes Graugussgefüge an der Ringlauffläche (10) freiliegt, Aufbringen einer Verschleißschutzschicht auf die Ringlauffläche (10) und das an der Ringlauffläche (10) freiliegende ledeburitisch umgeschmolzene Graugussgefüge (26), wobei ein Überlappungsbereich (42) von Verschleißschutzschicht und ledeburitisch umgeschmolzenem Graugussgefüge (4) erzeugt wird,
wobei ein Energieeintrag beim Umschmelzen in radialer Richtung variiert wird, so dass die Dicke des ledeburitisch umgeschmolzenen Graugussgefüges (4) radial variiert.

9. Verfahren zur Herstellung eines Kolbenrings gemäß Anspruch 8, weiter umfassend ein Spannungsarmglühen des Ringkörpers (14) nach dem Umschmelzen des Bereichs der mindestens einen Ringflanke (8) und vor dem Abtragen von Material an der Ringlauffläche (10), um eine Wärmeeinflusszone (20) zu beseitigen, die beim Umschmelzen erzeugt wurde.

10. Verfahren zur Herstellung eines Kolbenrings gemäß Anspruch 9, wobei die Temperatur beim Spannungsarmglühen 450 °C bis 600 °C, bevorzugt 500 °C bis 540°C, weiter bevorzugt 510 °C bis 530°C, beträgt und für eine Zeitdauer von 1 h bis 4 h, bevorzugt 1,5 h bis 3 h, weiter bevorzugt 1,8 h bis 2,3 h, gehalten wird.

11. Verfahren zur Herstellung eines Kolbenrings gemäß einem der Ansprüche 8 bis 10, wobei das Umschmelzen durch Bestrahlen mit hochenergetischer Strahlung erfolgt, ausgewählt aus Laserstrahl, Elektronenstrahl, Lichtbogenschweißen, Plasmaschweißen, Wolfram-Inertgas-Schweißen.

12. Verfahren zur Herstellung eines Kolbenrings gemäß einem der Ansprüche 8 bis 11, wobei der Energieeintrag beim Umschmelzen in radialer Richtung variiert wird, so dass die Dicke des ledeburitisch umgeschmolzenen Graugussgefüges (4) nach außen zunimmt.

13. Verfahren zur Herstellung eines Kolbenrings gemäß einem der Ansprüche 8 bis 12, weiter umfassend eine spanende Bearbeitung des Ringkörpers (14) um den Querschnitt zu verändern, von rechteckig zu trapezförmig oder von trapezförmig zu rechteckig.

14. Verfahren zur Herstellung eines Kolbenrings gemäß einem der Ansprüche 8 bis 13, weiter umfassend einen Schritt des Vorwärmens des Ringkörpers (14) vor dem Schritt des Umschmelzens.

15. Verfahren zur Herstellung eines Kolbenrings gemäß einem der Ansprüche 8 bis 14, weiter umfassend ein Umschmelzen der Ringlauffläche (10) nach dem Abtragen von Material an der Ringlauffläche und vor dem Aufbringen der Verschleißschutzschicht, um dort ledeburitisch umgeschmolzenes Graugussgefüge zu erzeugen.

## Claims

1. A piston ring, comprising a ring body (14) of gray cast iron,
wherein the ring body (14) has an area of ledeburitically remelted gray cast iron structure (4) on at least one ring flank (8) extending up to one edge of a ring face (10) and into the ring face (10);
wherein a wear-preventing layer is applied to the ring face (10), including the area of ledeburitically remelted gray cast iron structure (4); and
wherein the thickness of the ledeburitically remelted gray cast iron structure (4) on the ring flank (8) varies in the cross section in radial direction, and
wherein the thickness of the ledeburitically remelted gray cast iron structure (4) is between 0.15 mm and 1.0 mm.

2. The piston ring according to claim 1, wherein the ring body (14) has an area of ledeburitically remelted gray cast iron structure (4) on the ring face (10), extending over the entire ring face (10).

3. The piston ring according to claim 1, wherein the wear-preventing layer is in the form of a thermal spray layer, a hard substance coating applied by laser, a chromium dispersion layer, a PVD layer or a DLC layer.

4. The piston ring according to any one of the preceding claims, wherein the thickness of the ledeburitically remelted gray cast iron structure (4) varies in circumferential direction, wherein the thickness increases at abutting ends.

5. The piston ring according to any one of claims 1 to 4, wherein the thickness of the ledeburitically remelted gray cast iron structure (4) increases toward the outside or wherein an radially inner area of the at least one ring flank (8) does not have any ledeburitically remelted gray cast iron structure (4), wherein the radially inner area extends preferably over 1/3, more preferably over 2/3 of a radial dimension of the ring body (14).

6. The piston ring according to any one of claims 1 to 5, wherein the edge between the ring face (10) and the at least one ring flank (8) has a chamfer or wherein the edge between the ring face (10) and the at least one ring flank (8) is rounded, wherein the rounding preferably has a radius of 1 mm to 3 mm; wherein the dimension of the chamfer or the rounded area varies in circumferential direction.

7. The piston ring according to any one of the preceding claims, wherein the piston ring is a trapezoidal ring.

8. A method for producing a piston ring having a ledeburitically remelted gray cast iron structure, comprising:
producing a ring body (14) made of gray cast iron;
remelting an area of at least one ring flank (8) of the ring body (14) to create a ledeburitically remelted gray cast iron structure having a thickness between 0,15 mm and 1,0 mm on the at least one flank;
abrading material on one ring face (10) of the ring body (14) until ledeburitically remelted gray cast iron structure is exposed on the ring face (10);
applying a wear-preventing layer to the ring face (10) and the ledeburitically remelted gray cast iron structure (26) exposed on the ring face (10), wherein an overlap zone (42) of the wear-preventing layer and the ledeburitically remelted gray cast iron structure (4) is created,
wherein an energy input during remelting is varied in radial direction, so that the thickness of the ledeburitically remelted gray cast iron structure (4) varies radially.

9. The method for producing a piston ring according to claim 8, further comprising a stress-free annealing of the ring body (14) after remelting the area of the at least one ring flank (8) and before abrasion of material on the ring face (10) to eliminate a heat influence zone (20) created in remelting.

10. The method for producing a piston ring according to claim 9, wherein the temperature in stress-free annealing is 450 °C to 600 °C, preferably of 500 °C to 540 °C, more preferably of 510 °C to 530 °C and is maintained for a period of 1 hour to 4 hours, preferably of 1.5 hours to 3 hours, more preferably 1.8 hour to 2.3 hours.

11. The method for producing a piston ring according to any one of claims 8 to 10, wherein the remelting takes place by bombardment with high-energy radiation, selected from laser beam, electron beam, electric arc welding, plasma welding or tungsten inert gas welding.

12. The method for producing a piston ring according to any one of claims 8 to 11, wherein the energy input during remelting is varied in radial direction, so that the thickness of the ledeburitically remelted gray cast iron structure (4) increases towards the outside.

13. The method for producing a piston ring according to any one of claims 8 to 12, further comprising a machining of the ring body (14) to change the cross section from rectangular to trapezoidal or from trapezoidal to rectangular.

14. The method for producing a piston ring according to any one of claims 8 to 13, further comprising a step of preheating the ring body (14) before the step of remelting.

15. The method for producing a piston ring according to any one of claims 8 to 14, further comprising remelting of the ring face (10) after the removal of material on the ring face and before application of the wear-preventing layer, in order to create a ledeburitically remelted gray cast iron structure there.

## Revendications

1. Segment de piston comprenant un corps de segment (14) en fonte grise, dans lequel le corps de segment (14) présente une zone sur au moins un flanc de segment (8) en structure en fonte grise refondue lédeburitique (4), qui s'étend jusqu'à un bord d'une surface de roulement de segment (10) et dans la surface de roulement de segment (10) ;
dans lequel une couche de protection contre l'usure est appliquée sur la surface de roulement de segment (10) comprenant la zone de structure en fonte grise refondue lédeburitique (4) ;
dans lequel en coupe transversale l'épaisseur de la structure en fonde grise refondue lédeburitique (4) sur le flanc de segment (8) varie dans la direction radiale ; et
dans lequel l'épaisseur de la structure en fonte grise refondue lédeburitique (4) est comprise entre 0,15 mm et 1,0 mm.

2. Segment de piston selon la revendication 1, dans lequel le corps de segment (14) sur la surface de roulement de segment (10) présente une zone constituée d'une structure en fonte grise refondue lédeburitique (4) qui s'étend sur toute la surface de roulement de segment (10).

3. Segment de piston selon la revendication 1, dans lequel la couche de protection contre l'usure se présente sous la forme d'une couche de projection thermique, d'un revêtement en matériau dur appliqué au moyen d'un laser, d'une couche de dispersion de chrome, d'une couche PVD ou d'une couche DLC.

4. Segment de piston selon une quelconque des revendications précédentes, dans lequel l'épaisseur de la structure en fonte grise refondue lédeburitique (4) varie dans la direction circonférentielle, dans lequel l'épaisseur augmente aux extrémités.

5. Segment de piston selon une des revendications 1 à 4, dans lequel l'épaisseur de la structure en fonte grise refondue lédeburitique (4) augmente vers l'extérieur ou dans lequel une zone radialement intérieure du au moins un flanc de segment (8) ne présente pas de structure en fonte grise refondue lédeburitique (4), dans lequel la zone radialement intérieure s'étend de préférence sur 1/3, plus préférablement sur 2/3 d'une dimension radiale du corps de segment (14).

6. Segment de piston selon une des revendications 1 à 5, dans lequel le bord entre la surface de roulement de segment (10) et le au moins un flanc de segment (8) présente un chanfrein ou dans lequel le bord entre la surface de roulement de segment (10) et le au moins un flanc de segment (8) est arrondi, dans lequel l'arrondi présente de préférence un rayon de 1 mm à 3 mm ; dans lequel la dimension du chanfrein ou de l'arrondi varie dans la direction circonférentielle.

7. Segment de piston selon une des revendications précédentes, dans lequel le segment de piston est un segment trapézoïdal.

8. Procédé de fabrication d'un segment de piston avec une structure en fonte grise refondue lédeburitique, comprenant de :
fabriquer un corps de segment (14) en fonte grise;
refondre une zone d'au moins un flanc annulaire (8) du corps de segment (14) pour former une structure en fonte grise refondue lédeburitique sur le au moins un flanc pour réaliser des pièces en fonte grise d'épaisseur comprise entre 0,15 mm et 1,0 mm,
retirer de la matière sur une surface de roulement de segment (10) du corps de segment (14) jusqu'à ce que la structure en fonte grise refondue lédeburitique soit exposée sur la surface de roulement de segment (10),
appliquer une couche de protection contre l'usure sur la surface de roulement de segment (10) et la structure en fonte grise refondue lédeburitique exposée sur la surface de roulement de segment (26), dans lequel une zone de recouvrement (42) est produite à partir d'une couche de protection contre l'usure et d'une structure de fonte grise refondue lédeburitique (4),
dans lequel un apport d'énergie lors de la refusion est modifié dans la direction radiale de sorte que l'épaisseur de la structure en fonte grise refondue lédeburitique (4) varie radialement.

9. Procédé de fabrication d'un segment de piston selon la revendication 8, comprenant en outre un recuit de détente du corps de segment (14) après la refusion de la zone du au moins un flanc de segment (8) et avant le retrait de matériau sur la surface de roulement de segment (10), afin d'éliminer une zone affectée thermiquement (20), qui a été générée lors de la refusion.

10. Procédé de fabrication d'un segment de piston selon la revendication 9, dans lequel la température lors du recuit de détente est de 450°C à 600°C, de préférence de 500°C à 540°C, plus préférentiellement de 510°C à 530°C, et pendant une durée de 1h à 4h , de préférence 1,5 h à 3 h, plus préférablement 1,8 h à 2,3 h.

11. Procédé de fabrication d'un segment de piston selon une des revendications 8 à 10, dans lequel la refusion est réalisée par irradiation avec un rayonnement de haute énergie, choisi parmi un faisceau laser, faisceau d'électrons, soudage à l'arc, soudage plasma, soudage sous gaz inerte tungstène.

12. Procédé de fabrication d'un segment de piston selon une quelconque des revendications 8 à 11, dans lequel on fait varier l'apport d'énergie lors de la refusion dans la direction radiale, de sorte que l'épaisseur de la structure (4) en fonte grise refondue lédeburitique augmente vers l'extérieur.

13. Procédé de fabrication d'un segment de piston selon une quelconque des revendications 8 à 12, comprenant en outre un usinage par enlèvement de copeaux du corps de segment (14), pour modifier la section transversale, de rectangulaire à trapézoïdale ou de trapézoïdale à rectangulaire.

14. Procédé de fabrication d'un segment de piston selon une quelconque des revendications 8 à 13, comprenant en outre une étape de préchauffage du corps de segment (14) avant l'étape de refusion.

15. Procédé de fabrication d'un segment de piston selon une quelconque des revendications 8 à 14, comprenant en outre une refusion de la surface de roulement de segment (10) après le retrait de matériau sur la surface de roulement de segment et avant l'application de la couche de protection contre l'usure, afin d'y produire un alliage de fonte grise refondu lédeburitique.
